# EUROPEAN PATENT SPECIFICATION

(11) **EP 3 038 397 B1**
(45) Date of publication and mention of the grant of the patent: **05.05.2021**
(21) Application number: 15201428.8
(22) Date of filing: 18.12.2015
(51) Int. Cl.: H04W 12/00, H04W 12/08

(54) **METHOD AND DEVICE FOR P2P WIFI CONNECTION**
VERFAHREN UND VORRICHTUNG FÜR P2P WIFI VERBINDUNG
PROCÉDÉ ET DISPOSITIF DE CONNEXION P2P WIFI

(30) Priority: 23.12.2014 CN 201410810616
(43) Date of publication of application: 29.06.2016
(73) Proprietor: Xiaomi Inc., Beijing 100085 (CN)
(72) Inventor: LIANG, Xin, 100085 Haidian District (CN); WU, Ping, 100085 Haidian District (CN); LIU, Xin, 100085 Haidian District (CN); LIU, Bo, 100085 Haidian District (CN); WU, Guizhou, 100085 Haidian District (CN)
(74) Representative: Reeve, Nicholas Edward

(56) References cited:
- EP-A1- 2 611 079
- US-A1- 2012 265 913
- US-A1- 2013 223 279
- US-A1- 2013 276 075

## Description

### TECHNICAL FIELD

The present disclosure generally relates to the technical field of wireless connection between terminals, and more particularly, to a method and device for connection.

### BACKGROUND

With the development of technology, it is expected to remove the need for complex cables and setting-up steps required for mutual connection between a mobile phone and a smart television, etc., and to simplify the connection mode between different equipments, thus enabling content sharing such as screen sharing between different equipments more quickly and conveniently. In related art, a conventional P2P connection may be established between a mobile phone and a smart television for data transmission, or a wireless network may be created by the mobile phone before being accessed by the smart television for data transmission.

US 2012/0265913 A1 discloses a method, apparatus, and computer program product to enable simplified configuring of a wireless docking group for wireless devices. US 2013/0276075 A1 describes apparatus for peer-to-peer network setup, in which an apparatus comprises a wireless processing unit to communicate with a master device. EP 2611079 A1 relates to a network system of a home appliance configured to set up a network of the home appliance by using a terminal, and a network set-up method of the same.

### SUMMARY OF THE INVENTION

The present disclosure provides a method and device for connection.

According to a first aspect of the invention, a method for establishing connection between a first terminal and a second terminal is provided, the method being performed at the first terminal, the method comprising: establishing, at the first terminal, a P2P group over a wireless local area network; determining an SSID and a connection password of the P2P group; and sending the SSID and the connection password to the second terminal by broadcasting a WIFI frame so that the second terminal is connected with the first terminal via the P2P group according to the SSID and the connection password; wherein the WIFI frame is a Probe Request frame, and the SSID and the connection password are placed in an SSID field of the Probe Request frame.

Optionally, the step of determining an SSID and a connection password of the P2P group includes:
acquiring an SSID and a connection password generated randomly at the time of creating the P2P group; and
determining the SSID and the connection password generated randomly as the SSID and the connection password of the P2P group;
or
acquiring an SSID and a connection password inputted by a user, and
determining the SSID and the connection password inputted by the user as the SSID and the connection password of the P2P group.

According to a second aspect of the invention, a method for establishing connection between a first terminal and a second terminal is provided, the method being performed at the second terminal, the method comprising receiving an SSID and a connection password broadcast from a first terminal, the SSID and the connection password being an SSID and a connection password of a P2P group established at the first terminal over a wireless local area network; and connecting with the first terminal via the P2P group according to the SSID and the connection password; wherein the receiving an SSID and a connection password broadcast from a first terminal comprises receiving the SSID and the connection password through a WIFI frame broadcast by the first terminal, the WIFI frame being a Probe Request frame, wherein the SSID and the connection password are placed in an SSID field of the Probe Request frame..

According to a third aspect of the invention, a device for establishing connection is provided, being applicable to the first terminal, and being configured to carry out the method according to the first aspect of the invention.

According to a fourth aspect of the invention, a device for establishing connection is provided, being applicable to a second terminal, and being configured to carry out the method according to the second aspect of the invention.

According to a fifth aspect of the invention, there is provided a non-transitory computer-readable storage medium, comprising instructions which when executed on a processor performs a method according to the first or second aspects mentioned above.

The technical solution according to embodiments of the disclosure may achieve the following advantageous effects:

In the embodiments of the invention, the first terminal (taking a mobile terminal as an example) may create a P2P group, and then send the SSID and the connection password of the P2P group to the second terminal (taking a smart television as an example), or set the SSID and the connection password of the P2P group as an SSID and a connection password provided by the smart television. Prior to connection, both the SSID and the connection password have been transmitted, and the smart television may acquire the SSID and the connection password of the P2P group created by the mobile terminal, thus the SSID and the connection password may be used to directly connect the smart television with the terminal equipment without a cumbersome search and negotiation processes in establishment of a conventional P2P connection. Furthermore, it is unnecessary for the mobile terminal side to disconnect from the original wireless connection due to the establishment of the P2P group.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for connection according to an exemplary embodiment.
Fig. 2 is a flow chart showing a method for connection according to an exemplary embodiment.
Fig. 3 is a flow chart showing a method for connection according to an exemplary embodiment.
Fig. 4 is a schematic diagram showing a scenario in which a smart television is connected with a mobile phone according to an exemplary embodiment.
Fig. 5 is a flow chart showing a method for connection according to an exemplary embodiment not covered by the claimed invention.
Fig. 6 is a flow chart showing a method for connection according to an exemplary embodiment not covered by the claimed invention.
Fig. 7 is a schematic diagram showing scenario in which a smart television is connected with a mobile phone according to an exemplary embodiment not covered by the claimed invention.
Fig. 8 is a flow chart showing a method for connection according to an exemplary embodiment not covered by the claimed invention.
Fig. 9 is a flow chart showing a method for connection according to an exemplary embodiment not covered by the claimed invention.
Fig. 10 is a signaling diagram showing a method for connection according to an exemplary embodiment not covered by the claimed invention.
Fig. 11 is a block diagram showing a device for connection according to an exemplary embodiment.
Fig. 12 is a block diagram showing a device for connection according to an exemplary embodiment.
Fig. 13 is a block diagram showing a device for connection according to an exemplary embodiment.
Fig. 14 is a block diagram showing a device for connection according to an exemplary embodiment.
Fig. 15 is a block diagram showing a device for connection according to an exemplary embodiment not covered by the claimed invention.
Fig. 16 is a block diagram showing a device for connection according to an exemplary embodiment.
Fig. 17 is a block diagram showing a device for connection according to an exemplary embodiment.
Fig. 18 is a block diagram showing a device for connection according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of the exemplary embodiments do not represent all implementations consistent with the invention. Instead, they are merely examples of apparatuses and methods consistent with aspects related to the invention as recited in the appended claims.

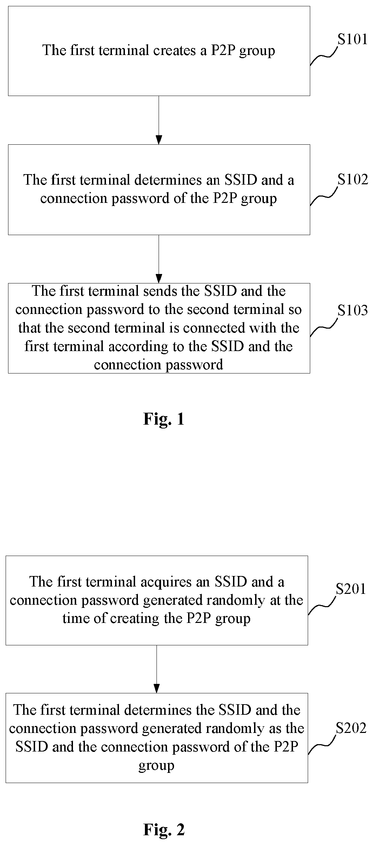

Fig. 1 is a flow chart showing a method for connection according to an exemplary embodiment. The method may be applied to a first terminal, for example, a mobile terminal such as a mobile phone, a tablet computer and the like. Referring to Fig. 1, the method may include following steps.

In Step S101, the first terminal creates a P2P group.

The term P2P group indicates a peer-to-peer network established over an IEEE 802.11 wireless local area network, identified by means of a service set identifier (SSID) in accordance with the IEEE 802 standards.

In the present embodiment, the P2P group needs to be created firstly at the first terminal side. The P2P group may be regarded as a hot spot. Nevertheless, it is unnecessary to disconnect an existing wireless connection for creating the P2P group. For example, in a scenario, the first terminal is connected to Extranet through WiFi and expected to share Extranet videos with a second terminal. The first terminal has to be disconnected from the Extranet originally connected if the first terminal creates an AP (Access Point) on which the second terminal can be logged. However, in this case, video sharing makes no sense. In the present embodiment, what is created by the first terminal is a P2P group, thus the problem of network disconnection will not occur, naturally not affecting video sharing.

In Step S102, both a service set identifier (SSID) and a connection password of the P2P group are determined by the first terminal.

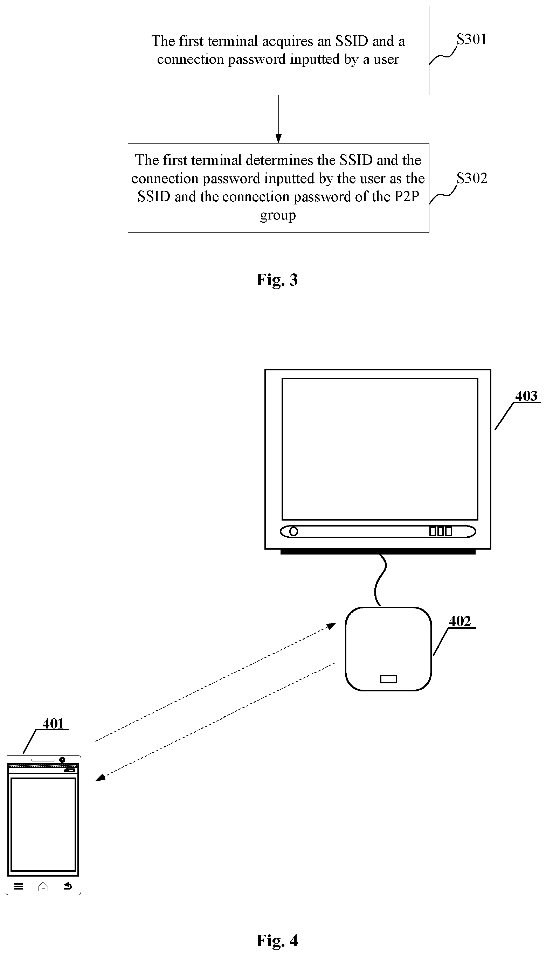

Referring to Figs. 2 and 3, in the present embodiment or other embodiments of the present disclosure, the step of determining both the SSID and the connection password of the P2P group may include following steps.

In Step S201, an SSID and a connection password generated randomly at the time of creating the P2P group are acquired by the first terminal.

In Step S202, the SSID and the connection password generated randomly are determined by the first terminal as the SSID and the connection password of the P2P group.

Or following steps may be included.

In Step S301, an SSID and a connection password inputted by a user are acquired by the first terminal.

In Step S302, the first terminal determines the SSID and the connection password inputted by the user as the SSID and the connection password of the P2P group.

In Step S103, the first terminal sends both the SSID and the connection password to the second terminal so that the second terminal is able to be connected with the first terminal according to the SSID and the connection password.

A scenario may be referred to as shown by Fig. 4. In Fig. 4, 401 stands for a first terminal, in particular for a mobile phone; 402 stands for a second terminal, in particular for a smart TV box; 403 stands for a conventional television connected with the smart TV box 402. After creating a P2P group, the mobile phone 401 sends both an SSID and a connection password of the P2P group to the smart TV box 402 which may be connected with the mobile phone 401 using the SSID and the connection password.

After the connection is established, interaction such as standard RTSP (Real-time Transport Streaming Protocol) may be progressed between both sides. A procedure of subsequent data transmission after the connection is established may refer to Miracast™ technology, which is not repeated any more in the present embodiment.

The present embodiment does not limit the way by which the first terminal sends the SSID and the connection password to the second terminal. In the present embodiment or other embodiments of the present disclosure, the step of sending both the SSID and the connection password to the second terminal includes :
the first terminal sends both the SSID and the connection password to the second terminal by broadcasting a WIFI frame, and both the SSID and the connection password are placed in a preset field of the WIFI frame.

The WiFi frame is a Probe Request. The Probe Request is configured to scan 802.11 networks which are available in the area at present. The device may take the initiative to make a Probe Request and wait for a Probe Response from an AP, achieving search of the AP hereby. The first terminal may place the SSID and the connection password in an SSID filed of the Probe Request and then broadcast the same. Thus, no connection needs to be established between the first terminal and the second terminal in advance as the second terminal may intercept the Probe Request sent out by the first terminal and parses the SSID and the connection password from the SSID filed of the Probe Request.

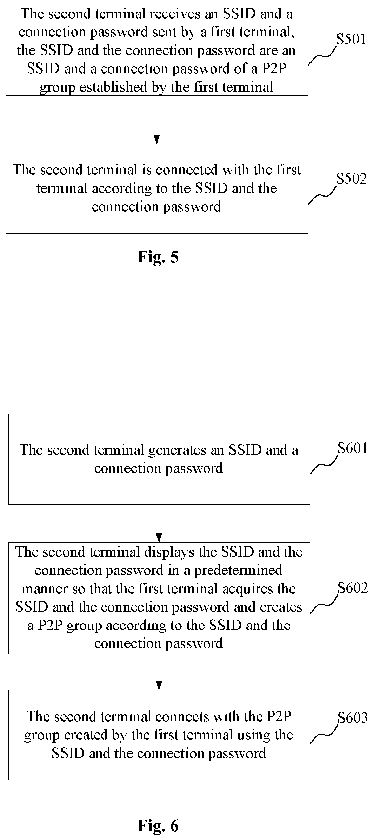

Fig. 5 is a flow chart showing a method for connection according to an exemplary embodiment. The method may be applied to a second terminal, for example, a smart television, a smart TV box or a smart sound box, etc. Referring to Fig. 5, the method may include following steps.

In Step S501, the second terminal receives an SSID and a connection password sent by a first terminal, the SSID and the connection password are an SSID and a connection password of a P2P group created by the first terminal.

In Step S502, the second terminal is connected with the first terminal according to the SSID and the connection password.

In the present embodiment or other embodiments of the present disclosure, the step of receiving both the SSID and the connection password sent by the first terminal may include:
intercepting a WIFI frame and acquiring the SSID and the connection password by parsing the WIFI frame intercepted, and both the SSID and the connection password are placed in a preset field of the WIFI frame
The exemplary embodiments as disclosed in relation to figures 6-10, 15 are not covered by the claimed invention.

Fig. 6 is a flow chart showing a method for connection according to an exemplary embodiment. The method may be applied to a second terminal, for example, a smart television, a smart TV box or a smart sound box, etc. Referring to Fig. 6, the method may include following steps.

In Step S601, the second terminal generates an SSID and a connection password.

In the present embodiment, a P2P group is created still by the first terminal, through which the second terminal is connected with the first terminal. However, both the SSID and the connection password of the P2P group created by the first terminal is determined by the second terminal instead of the first terminal. In other words, the P2P group is created by the first terminal according to the SSID and the connection password known to the second terminal. The second terminal may be directly connected with the first terminal without any step such as search or negotiation, thus simplifying a process of establishing the connection between both sides.

Both the SSID and the connection password known to the second terminal may be randomly generated by a pre-defined random algorithm, to which the present embodiment does not limit.

As an example, in the present embodiment or other embodiments of the present disclosure, the step of acquiring an SSID and a connection password may include:
the second terminal acquires an SSID and a connection password which are preset or randomly generated, or
the second terminal receives an SSID and a connection password inputted by the user.

In other words, the SSID and the connection password may either be set by the user on the second terminal, or be preset as default of the second terminal, for example, the SSID may be a serial number of the second terminal, and the connection password may be preset as "123456", etc.

In Step S602, the second terminal displays the SSID and the connection password in a predetermined manner so that the first terminal is able to acquire the SSID and the connection password and creates a P2P group according to the SSID and the connection password.

In Step S603, the second terminal connects with the P2P group created by the first terminal using the SSID and the connection password.

For example, the step of displaying the SSID and the connection password in a predetermined manner may include:
displaying the SSID and the connection password on a screen of the second terminal in the form of a two-dimensional code.

The second terminal displays the two-dimensional code on its own screen, and the first terminal may acquire the SSID and the connection password by shooting and parsing the two-dimensional code. By this means, it is convenient to transmit the SSID and the connection password without establishing any connection between both terminals in advance.

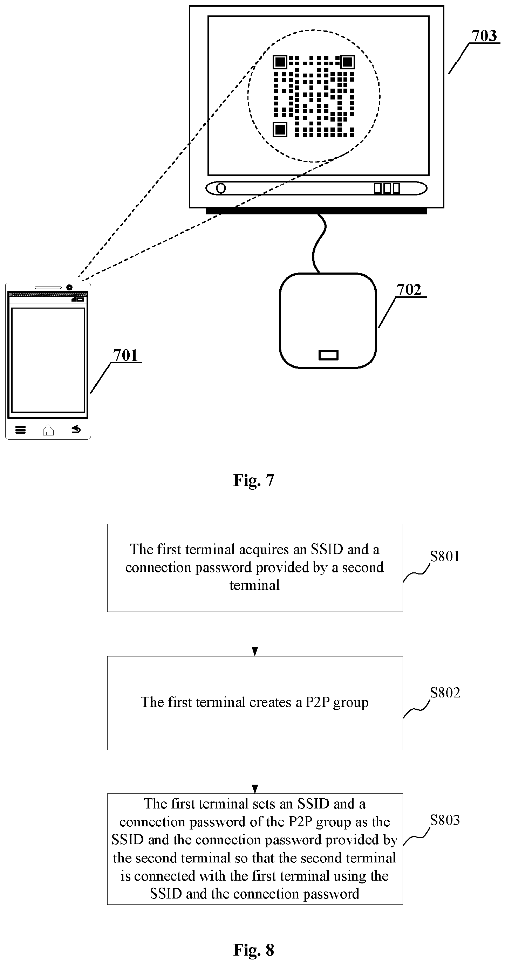

As an example, the scenario may be referred to as shown by Fig. 7. In Fig. 7, 701 stands for a first terminal, in particular to a mobile phone; 702 stands for a second terminal, in particular to a smart TV box; and 703 stands for a conventional television. The smart TV box 702 generates a two-dimensional code and displays it on the television 703, and the mobile phone 701 acquires the SSID and the connection password by shooting the two-dimensional code.

Fig. 8 is a flow chart showing a method for connection according to an exemplary embodiment. The method may be applied to a first terminal, for example, a mobile terminal such as a mobile phone, a tablet computer and the like. Referring to Fig. 8, the method may include following steps.

In Step S801, the first terminal acquires an SSID and a connection password provided by the second terminal.

In Step S802, the first terminal creates a P2P group.

It should be explained that the present embodiment does not limit the sequence of Steps S801 and S802.

In Step S803, the first terminal sets an SSID and a connection password of the P2P group as the SSID and the connection password provided by the second terminal so that the second terminal is able to be connected with the first terminal using the SSID and the connection password.

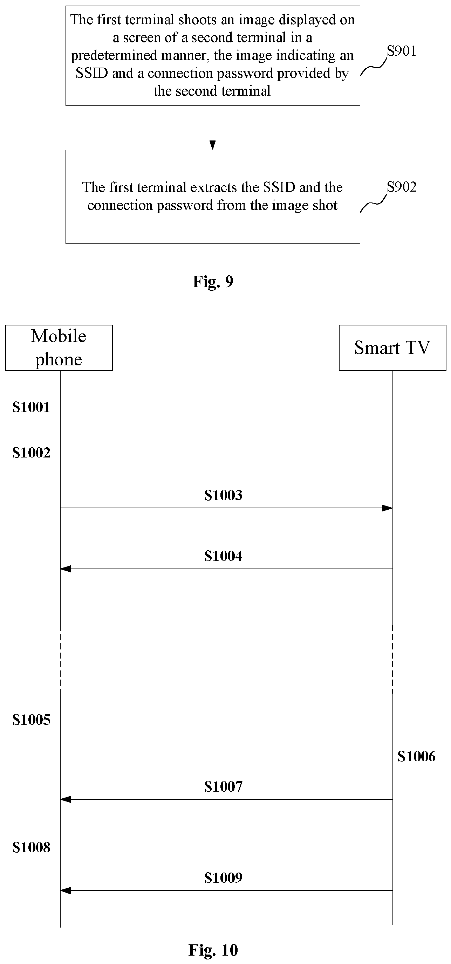

Referring to Fig. 9, in the present embodiment or other embodiments of the present disclosure, the step of acquiring the SSID and the connection password provided by the second terminal may include:
In Step S901, the first terminal shoots an image displayed on a screen of the second terminal in a predetermined manner, and the image is used to indicate the SSID and the connection password provided by the second terminal. As an example, the image may be in the form of a two-dimensional code.

In Step S902, the first terminal extracts the SSID and the connection password from the image shot.

Further description of the technical solution of the present disclosure will be made in combination with a concrete scenario.

Fig. 10 is a signaling diagram showing a method for connection according to an exemplary embodiment. In the present embodiment, the first terminal is a mobile phone, and the second terminal is a smart television.

In Step S1001, the mobile phone creates a P2P group 1.

For example, the P2P group may be created by using a P2P_GROUP_ADD persistent command under Linux™. Regarding a mobile phone with an Android system, establishment of the P2P group may achieved by calling an upper-layer interface 'p2pGroupAdd'.

In Step S1002, the mobile phone determines an SSID and a connection password of the P2P group 1.

In Step S1003, the mobile phone sends the SSID and the connection password of the P2P group 1 to the smart television.

In Step S1004, a connection is established between the smart television and the mobile phone using the SSID and the connection password.

In Step S1005, the mobile phone creates a P2P group 2 for another connection.

In Step S1006, the smart television provides an SSID and a connection password of the P2P group 2, and displays both on its screen in the form of a two-dimensional code.

In Step S1007, the mobile phone acquires the SSID and the connection password by shooting the two-dimensional code.

In Step S1008, the mobile phone sets the P2P group 2 using the SSID and the connection password.

In Step S1009, a connection is established between the smart television and the mobile phone using the SSID and the connection password.

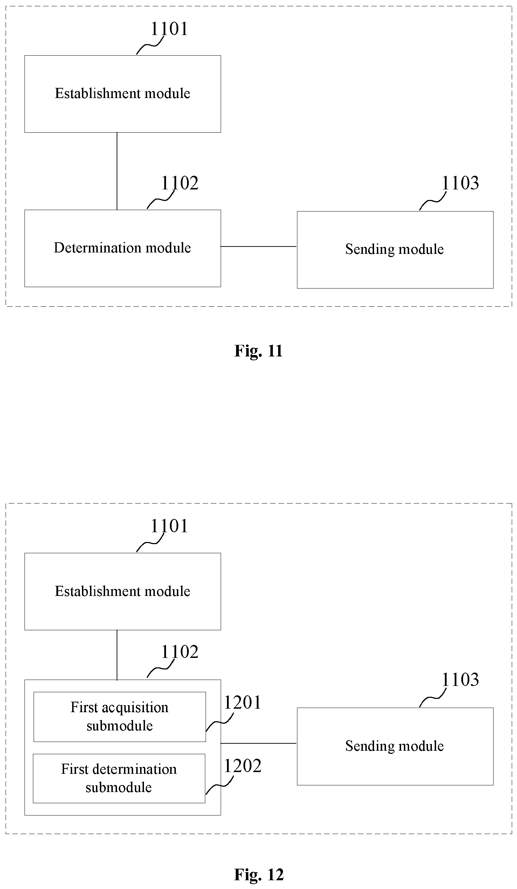

Fig. 11 is a block diagram showing a device for connection according to an exemplary embodiment. The device may be applied to a first terminal. Referring to Fig. 11, the device includes:
an establishment module 1101, configured to create a P2P group;
a determination module 1102, configured to determine an SSID and a connection password of the P2P group; and
a sending module 1103, configured to send both the SSID and the connection password to the second terminal so that the second terminal is able to be connected with a first terminal using the SSID and the connection password.

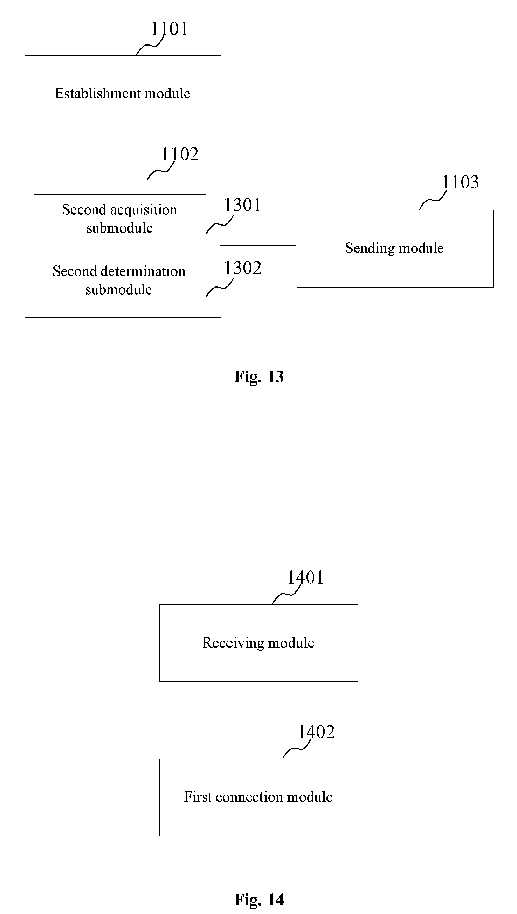

Referring to Figs. 12 and 13, in the present embodiment or other embodiments of the present disclosure, the determination module may include:
a first acquisition submodule 1201, configured to acquire an SSID and a connection password generated randomly at the time of creating the P2P group; and
a first determining submodule 1202, configured to determine the SSID and the connection password generated randomly as the SSID and the connection password of the P2P group;
or
a second acquisition submodule 1301, configured to acquire an SSID and a connection password inputted by a user, and
a second determining submodule 1302, configured to determine the SSID and the connection password inputted by the user as the SSID and the connection password of the P2P group.

In the present embodiment or other embodiments of the present disclosure, the sending module may be configured to:
directly send both the SSID and the connection password to the second terminal through a same LAN, or
send both the SSID and the connection password to the second terminal through a Bluetooth connection, or
send both the SSID and the connection password to the second terminal through a NFC connection, or
send both the SSID and the connection password to the second terminal through broadcasting a WIFI frame, and both the SSID and the connection password are placed in a preset field of the WIFI frame.

With regard to the device in the above embodiment, detailed description of specific modes for conducting operation of modules has been made in the embodiment related to the method, and no detailed illustration will be made herein.

Fig. 14 is a block diagram showing a device for connection according to an exemplary embodiment. The device may be applied to a second terminal. Referring to Fig. 14, the device includes:
a receiving module 1401, configured to receive an SSID and a connection password sent by the a terminal, the SSID and the connection password are an SSID and a connection password of a P2P group created by the first terminal; and
a first connection module 1402, configured to connect the first terminal using the SSID and the connection password.

In the present embodiment or other embodiments of the present disclosure, the receiving module may be configured to:
receive both the SSID and the connection password directly sent by the first terminal through a same LAN, or
receive both the SSID and the connection password through a Bluetooth connection, or
receive both the SSID and the connection password through a NFC connection, or
intercept a WIFI frame and acquire the SSID and the connection password by parsing the WIFI frame intercepted, and both the SSID and the connection password are placed in a preset field of the WIFI frame.

With regard to the device in the above embodiment, detailed description of specific modes for conducting operation of modules has been made in the embodiment related to the method, and no detailed illustration will be made herein.

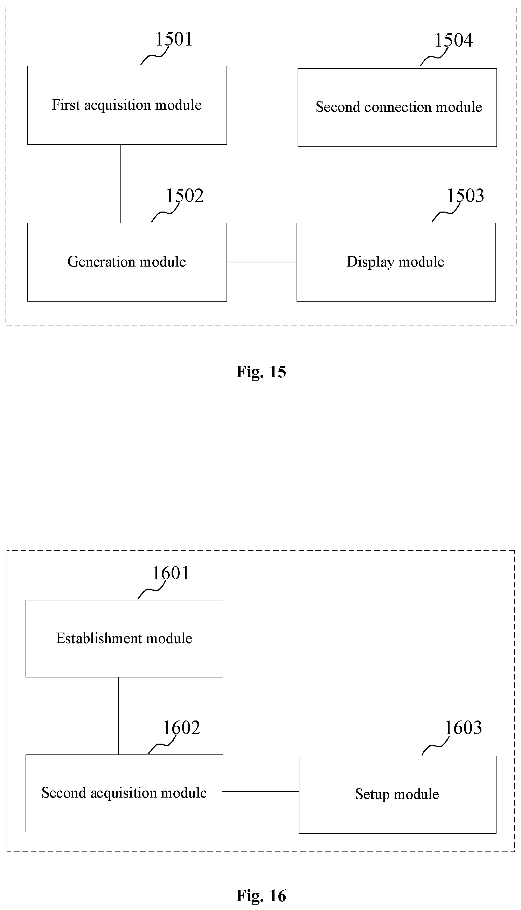

Fig. 15 is a block diagram showing a device for connection according to an exemplary embodiment. The device may be applied to a second terminal. Referring to Fig. 15, the device includes:
a first acquisition module 1501, configured to acquire an SSID and a connection password generated;
a generation module 1502, configured to generate an image according to the SSID and the connection password in a predetermined manner, as an example, the image may be in the form of a two-dimensional code;
a display module 1503, configured to display the image on a screen of the second terminal so that a first terminal is able to acquire the SSID and the connection password and creates a P2P group according to the SSID and the connection password; and
a second connection module 1504, configured to connect with the P2P group created by the first terminal according to the SSID and the connection password.

In the present embodiment or other embodiments of the present disclosure, the first acquisition module may be configured to:
acquire an SSID and a connection password which are preset, or
receive an SSID and a connection password inputted by a user.

With regard to the device in the above embodiment, detailed description of specific modes for conducting operation of modules has been made in the embodiment related to the method, and no detailed illustration will be made herein.

Fig. 16 is a block diagram showing a device for connection according to an exemplary embodiment. The device may be applied to a first terminal. Referring to Fig. 16, the device includes:
an establishment module 1601, configured to create a P2P group;
a second acquisition module 1602, configured to acquire an SSID and a connection password provided by the second terminal; and
a setup module 1603, configured to set both an SSID and a connection password of the P2P group as the SSID and the connection password provided by the second terminal so that the second terminal is able to be connected with the first terminal according to the SSID and the connection password.

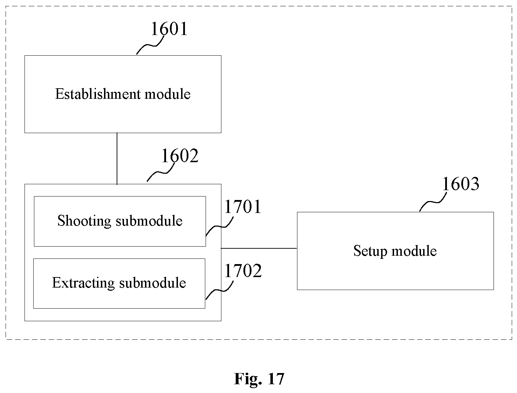

Referring to Fig. 17, in the present embodiment or other embodiments of the present disclosure, the second acquisition module includes:
a shooting submodule 1701, configured to shoot an image displayed on a screen of the second terminal in a predetermined manner, and the image is used to indicate the SSID and the connection password provided by the second terminal; and
an extracting submodule 1702, configured to extract the SSID and the connection password from the image shot.

With regard to the device in the above embodiment, detailed description of specific modes for conducting operation of modules has been made in the embodiment related to the method, and no detailed illustration will be made herein.

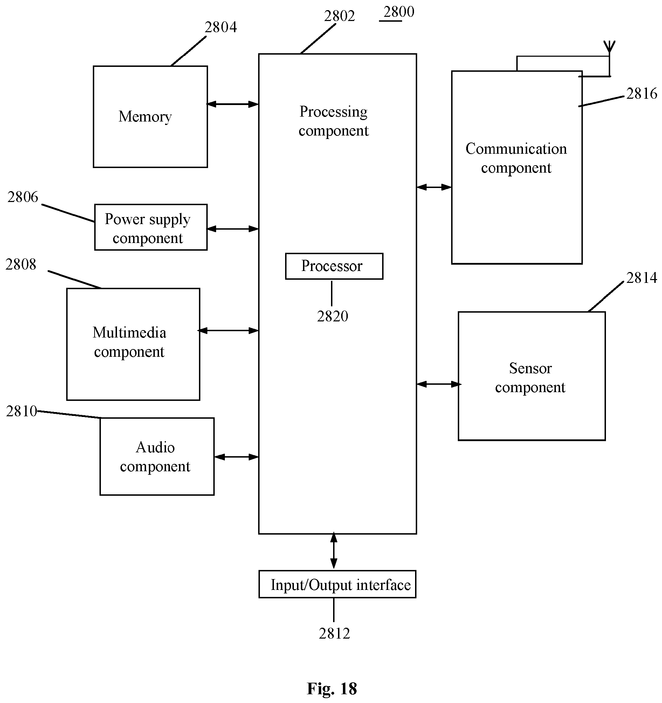

Fig. 18 is a block diagram showing a device for connection according to an exemplary embodiment. For example, the device 2800 may be a mobile telephone, a computer, a digital broadcasting terminal, a message transceiver device, a games console, a tablet device, a medical device, a fitness facility, a PDA (personal digital assistant) and the like.

Referring to Fig. 18, the device 2800 may include one or more of the following components: a processing component 2802, a memory 2804, a power component 2806, a multimedia component 2808, an audio component 2810, an input/output (I/O) interface 2812, a sensor component 2814, and a communication component 2816.

The processing component 2802 typically controls overall operations of the device 2800, such as the operations associated with display, telephone calls, data communications, camera operations, and recording operations. The processing component 2802 may include one or more processors 2820 to execute instructions to perform all or part of the steps in the above described methods. Moreover, the processing component 2802 may include one or more modules which facilitate the interaction between the processing component 2802 and other components. For instance, the processing component 2802 may include a multimedia module to facilitate the interaction between the multimedia component 2808 and the processing component 2802.

The memory 2804 is configured to store various types of data to support the operation of the device 2800. Examples of such data include instructions for any applications or methods operated on the device 2800, contact data, phonebook data, messages, pictures, video, etc. The memory 2804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2806 provides power to various components of the device 2800. The power component 2806 may include a power management system, one or more power sources, and any other components associated with the generation, management, and distribution of power in the device 2800.

The multimedia component 2808 includes a screen providing an output interface between the device 2800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2808 includes a front camera and/or a rear camera. The front camera and the rear camera may receive an external multimedia datum while the device 2800 is in an operation mode, such as a photographing mode or a video mode. Each of the front camera and the rear camera may be a fixed optical lens system or have focus and optical zoom capability.

The audio component 2810 is configured to output and/or input audio signals. For example, the audio component 2810 includes a microphone ("MIC") configured to receive an external audio signal when the device 2800 is in an operation mode, such as a call mode, a recording mode, and a voice recognition mode. The received audio signal may be further stored in the memory 2804 or transmitted via the communication component 2816. In some embodiments, the audio component 2810 further includes a speaker to output audio signals.

The I/O interface 2812 provides an interface between the processing component 2802 and peripheral interface modules, such as a keyboard, a click wheel, buttons, and the like. The buttons may include, but are not limited to, a home button, a volume button, a starting button, and a locking button.

The sensor component 2814 includes one or more sensors to provide status assessments of various aspects of the device 2800. For instance, the sensor component 2814 may detect an open/closed status of the device 2800, relative positioning of components, e.g., the display and the keypad, of the device 2800, a change in position of the device 2800 or a component of the device 2800, a presence or absence of user contact with the device 2800, an orientation or an accclcration/dccclcration of the device 2800, and a change in temperature of the device 2800. The sensor component 2814 may include a proximity sensor configured to detect the presence of nearby objects without any physical contact. The sensor component 2814 may also include a light sensor, such as a CMOS or CCD image sensor, for use in imaging applications. In some embodiments, the sensor component 2814 may also include an accelerometer sensor, a gyroscope sensor, a magnetic sensor, a pressure sensor, or a temperature sensor.

The communication component 2816 is configured to facilitate communication, wired or wirelessly, between the device 2800 and other devices. The device 2800 can access a wireless network based on a communication standard, such as WiFi, 2G, or 3G, or a combination thereof. In one exemplary embodiment, the communication component 2816 receives a broadcast signal or broadcast associated information from an external broadcast management system via a broadcast channel. In one exemplary embodiment, the communication component 2816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 2804, executable by the processor 2820 in the device 2800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for establishing connection between a first terminal and a second terminal, the method being performed at the first terminal, the method comprising:
establishing (S101), at the first terminal, a P2P group over a wireless local area network;
determining (S102) an SSID and a connection password of the P2P group; and
sending (SI03) the SSID and the connection password to the second terminal by broadcasting a WIFI frame so that the second terminal is connected with the first terminal via the P2P group according to the SSID and the connection password;
wherein the WIFI frame is a Probe Request frame, and the SSID and the connection password are placed in an SSID field of the Probe Request frame.

2. The method of claim 1, wherein the determining an SSID and a connection password of the P2P group comprises:
acquiring (S201) an SSID and a connection password generated randomly at the time of creating the P2P group; and
determining (S202) the SSID and the connection password generated randomly as the SSID and the connection password of the P2P group;
or
acquiring (S301) an SSID and a connection password inputted from a user, and
determining (S302) the SSID and the connection password inputted from the user as the SSID and the connection password of the P2P group.

3. A method for establishing connection between a first terminal and a second terminal, the method being performed at the second terminal, the method comprising:
receiving (S501) an SSID and a connection password broadcast from a first terminal, the SSID and the connection password being an SSID and a connection password of a P2P group established at the first terminal over a wireless local area network; and
connecting (S502) with the first terminal via the P2P group according to the SSID and the connection password;
wherein the receiving an SSID and a connection password broadcast from a first terminal comprises receiving the SSID and the connection password through a WIFI frame broadcast by the first terminal, the WIFI frame being a Probe Request frame, wherein the SSID and the connection password are placed in an SSID field of the Probe Request frame.

4. A first terminal device for establishing connection between the first terminal and a second terminal, the device configured to carry out the method of claim 1 or 2

5. A second terminal device for establishing connection between a first terminal and the second terminal, the device configured to carry out the method of claim 3.

6. A non-transitory computer-readable storage medium, comprising instructions which when executed on a processor performs a method according to any one of claims 1 to 3.

## Patentansprüche

1. Verfahren zum Herstellen einer Verbindung zwischen einem ersten Endgerät und einem zweiten Endgerät, wobei das Verfahren an dem ersten Endgerät durchgeführt wird, wobei das Verfahren Folgendes aufweist:
Herstellen (S101), an dem ersten Endgerät, einer P2P-Gruppe über ein drahtloses lokales Netzwerk;
Bestimmen (S102) einer SSID und eines Verbindungspassworts der P2P-Gruppe; und
Senden (S103) der SSID und des Verbindungspassworts an das zweite Endgerät durch Aussenden eines WiFi-Frames, so dass das zweite Endgerät über die P2P-Gruppe gemäß dem SSID und dem Verbindungspasswort mit dem ersten Endgerät verbunden wird;
wobei der WiFi-Frame ein Probe Request-Frame ist und die SSID und das Verbindungspasswort in ein SSID-Feld des Probe Request-Frames gesetzt sind.

2. Verfahren nach Anspruch 1, wobei das Bestimmen einer SSID und eines Verbindungspassworts der P2P-Gruppe Folgendes aufweist:
Erfassen (S201) einer bzw. eines zum Zeitpunkt der Erstellung der P2P-Gruppe zufällig generierten SSID und Verbindungspassworts; und
Bestimmen (S202) der bzw. des zufällig generierten SSID und Verbindungspassworts als die SSID und das Verbindungspasswort der P2P-Gruppe;
oder
Erfassen (S301) einer bzw. eines von einem Benutzer eingegebenen SSID und Verbindungspassworts und
Bestimmen (S302) der bzw. des von dem Benutzer eingegebenen SSID und Verbindungspassworts als die SSID und das Verbindungspassworts der P2P-Gruppe.

3. Verfahren zur Herstellung einer Verbindung zwischen einem ersten Endgerät und einem zweiten Endgerät, wobei das Verfahren an dem zweiten Endgerät durchgeführt wird, wobei das Verfahren Folgendes aufweist:
Empfangen (S501) einer bzw. eines von einem ersten Endgerät ausgesendeten SSID und Verbindungspassworts, wobei die SSID und das Verbindungspasswort eine SSID und ein Verbindungspasswort einer an dem ersten Endgerät über ein drahtloses lokales Netzwerk eingerichteten P2P-Gruppe sind; und
Verbinden (S502) gemäß der SSID und dem Verbindungspasswort über die P2P-Gruppe mit dem ersten Endgerät;
wobei das Empfangen einer bzw. eines von einem ersten Endgerät ausgesendeten SSID und Verbindungspassworts das Empfangen der SSID und des Verbindungspassworts durch einen von dem ersten Endgerät ausgesendeten WiFi-Frame aufweist, wobei der WiFi-Frame ein Probe Request-Frame ist, wobei die SSID und das Verbindungspasswort in ein SSID-Feld des Probe Request-Frames gesetzt sind.

4. Erste Endgerätvorrichtung zur Herstellung einer Verbindung zwischen dem ersten Endgerät und einem zweiten Endgerät, wobei die Vorrichtung zum Durchführen des Verfahrens nach Anspruch 1 oder Anspruch 2 konfiguriert ist.

5. Zweite Endgerätvorrichtung zur Herstellung einer Verbindung zwischen einem ersten Endgerät und dem zweiten Endgerät, wobei die Vorrichtung zum Durchführen des Verfahrens nach Anspruch 3 konfiguriert ist.

6. Nichtflüchtiges computerlesbares Speichermedium, das Anweisungen aufweist, die bei Ausführung in einem Prozessor ein Verfahren nach einem der Ansprüche 1 bis 3 durchführen.

## Revendications

1. Procédé d'établissement de connexion entre un premier terminal et un deuxième terminal, le procédé étant effectué au premier terminal, le procédé comprenant :
établir (S101), au premier terminal, un groupe P2P sur un réseau local sans fil ;
déterminer (S102) un SSID et un mot de passe de connexion du groupe P2P ; et
envoyer (S103) le SSID et le mot de passe de connexion au deuxième terminal en diffusant une trame WIFI de telle sorte que le deuxième terminal est connecté au premier terminal via le groupe P2P conformément au SSID et au mot de passe de connexion;
dans lequel la trame WIFI est une Probe Request Frame, et le SSID et le mot de passe de connexion sont placés dans un champ SSID de la Probe Request Frame.

2. Procédé selon la revendication 1, dans lequel le fait de déterminer un SSID et un mot de passe de connexion du groupe P2P comprend :
acquérir (S201) un SSID et un mot de passe de connexion générés de manière aléatoire au moment de la création du groupe P2P ; et
déterminer (S202) le SSID et le mot de passe de connexion générés de manière aléatoire comme le SSID et le mot de passe de connexion du groupe P2P ;
ou bien
acquérir (S301) un SSID et un mot de passe de connexion entrés par un utilisateur ; et
déterminer (S302) le SSID et le mot de passe de connexion entrés par l'utilisateur comme le SSID et le mot de passe de connexion du groupe P2P.

3. Procédé d'établissement de connexion entre un premier terminal et un deuxième terminal, le procédé étant effectué au deuxième terminal, le procédé comprenant :
recevoir (S501) un SSID et un mot de passe de connexion diffusés d'un premier terminal, le SSID et le mot de passe de connexion étant un SSID et un mot de passe de connexion d'un groupe P2P établi au premier terminal sur un réseau local sans fil ; et
se connecter (S502) avec le premier terminal via le groupe P2P conformément au SSID et au mot de passe de connexion ;
dans lequel le fait de recevoir un SSID et un mot de passe de connexion diffusés d'un premier terminal comprend recevoir le SSID et le mot de passe de connexion par une trame WIFI diffusée par le premier terminal, la trame WIFI étant une Probe Request Frame, dans lequel le SSID et le mot de passe de connexion sont placés dans un champ SSID de la Probe Request Frame.

4. Dispositif de premier terminal pour établir une connexion entre le premier terminal et un deuxième terminal, le dispositif étant configuré pour mettre en œuvre le procédé selon la revendication 1 ou 2.

5. Dispositif de deuxième terminal pour établir une connexion entre un premier terminal et le deuxième terminal, le dispositif étant configuré pour mettre en œuvre le procédé selon la revendication 3.

6. Support de stockage non transitoire lisible par ordinateur, comprenant des instructions qui lorsque exécutées sur un processeur mettent en œuvre un procédé selon l'une quelconque des revendications 1 à 3.
